# EUROPÄISCHE PATENTSCHRIFT

(11) **EP 0 326 681 B1**
(45) Veröffentlichungstag und Bekanntmachung des Hinweises auf die Patenterteilung: **12.05.1993**
(21) Anmeldenummer: 88120440.8
(22) Anmeldetag: 07.12.1988
(51) Int. Cl.: B23K 9/10

(54) **Lichtbogenschweissgerät für Gleich- und Wechselstromspeisung**
Arc welding apparatus for direct and alternating current supply
Appareil de soudage à l'arc pour l'alimentation en courant continu et alternatif

(30) Priorität: 05.02.1988 DE 3803447
(43) Veröffentlichungstag der Anmeldung: 09.08.1989
(73) Patentinhaber: EWM Elektrowerk Mündersbach Verwaltungsgesellschaft mbH, D-56271 Mündersbach (DE)
(72) Erfinder: Futterlieb, Erhard, D-6800 Mannheim (DE)
(74) Vertreter: Cohausz & Florack Patentanwälte

(56) Entgegenhaltungen:
- US-A- 4 564 742
- PATENT ABSTRACTS OF JAPAN, Band 4, Nr. 96 (M-20)[578], 11. Juli 1980, Seite 59 M 20; & JP-A-55 54 274 (MATSUSHITA DENKI SANGYO K.K.) 21-04-1980
- PATENT ABSTRACTS OF JAPAN, Band 7, Nr. 85 (M-206)[1230], 9. April 1983; & JP-A-58 9768 (SANSHIYA DENKI SEISAKUSHO K.K.) 20-01-1983

## Beschreibung

Die Erfindung betrifft ein Lichtbogenschweißgerät bestehend aus einem wechselstromgespeisten Gleichrichter, der einen Zwischenkreis versorgt, mindestens einem an den Zwischenkreis angeschlossenen, von einer ersten Steuereinrichtung primärseitig wechselweise getakteten Stromwandler, der sekundärseitig Stromkreise mit einem gemeinsamen Mittenanschluß zur Speisung der Schweißelektrode bildet, welche jeweils parallel zur Schweißelektrode eine Freilaufdiode und in Reihe zur Schweißelektrode eine Gleichrichterdiode und eine Drossel enthalten.

Ein solches Schweißgerät ist aus dem stand der Technik bekannt (US 4,564,742). Die Schweißelektrode wird bei dem bekannten Gerät derart angeschlossen, daß der Schweißstrom die Schweißelektrode nur in einer Richtung, also nur für Gleichstrombetrieb, durchfließen kann. Bei besonderen Anwendungsfällen, z.B. beim Schweißen von Aluminium, ist es jedoch erforderlich, daß die Schweißelektrode derart mit Strom versorgt wird, daß die während einer Schweißperiode mit einer, z.B. positiven Stromrichtung gebildete Oxidschicht durch einen gegengerichteten, negativen Strom während der folgenden Periode wieder aufgebrochen wird. Für einen solchen Wechselstrombetrieb ist das bekannte Scheißgerät jedoch nicht geeignet.

Ein anderes Lichtbogenschweißgerät ist aus der DE-OS 29 13 625 bekannt, bei welchem zwei getrennte Stromwandler vorgesehen sind, die jeweils zwei Primärteilwicklungen aufweisen. Auch dieses Schweißgerät ist nur für Gleichstrombetrieb geeignet. Darüberhinaus ist ein Lichtbogenschweißgerät aus "Schweißtechnik, Berlin 34 (1984), Nr. 8, S. 43 bis 342" bekannt, welches jedoch ebenfalls nur für Gleichstrombetrieb ausgelegt ist.

Aus JP 55-54274 (A) ist eine Schaltungsanordnung für ein Lichtbogenschweißgerät bekannt, welches sekundärseitig Umschalter enthält, durch die der Lastkreis vom Gleichstrom - auf Wechselstrombetrieb umgeschaltet werden kann. Bei dieser eckigen Haltung sind jedoch keine Freilaufdioden parallel zur Schweißelektrode vorgesehen.

Daher liegt der Erfindung die Aufgabe zugrunde, bei einem Lichtbogenschweißgerät der eingangs genannten Art eine Versorgung der Schweißelektrode auch mit Wechselstrom zu ermöglichen.

Diese Aufgabe wird erfindungsgemäß dadurch gelöst, daß ein Umschalter vorgesehen ist, in dessen erster Stellung beide Stromkreise gemeinsam mit dem einen Anschluß der Schweißelektrode und der Mittenanschluß mit dem anderen Anschluß der Schweißelektrode und in dessen zweiter Stellung der erste Stromkreis mit dem einen Anschluß, der zweite Stromkreis mit dem anderen Anschluß verbunden ist und der Mittenanschluß vom anderen Anschluß getrennt ist, und daß parallel zu den Freilaufdioden erste und zweite, durch eine zweite Steuereinrichtung steuerbare Halbleiterschalter vorgesehen sind derart, daß in der zweiten Stellung des Umschalters der erste Halbleiterschalter den Strom des ersten Stromkreises und der zweite Halbleiterschalter den Strom des zweiten Stromkreises führt.

Durch die Festlegung des jeweiligen Betriebszustandes des Schweißgerätes durch die Anschlußbelegung des Umschalters und die gesteuerten Halbleiterschalter, ergibt sich ein einfacher Aufbau des Schweißgerätes, da gegenüber dem Gleichstrombetrieb kein zusätzlicher schaltungstechnischer Aufwand erforderlich ist.

Während bei Gleichstromspeisung beide Stromkreise an einem gemeinsamen Anschluß der Schweißelektrode angeschlossen sind, durchfließen in der zweiten Stellung des Umschalters die den beiden Stromkreisen entstammenden Ströme die Schweißelektrode gegensinnig. Um in diesem, dem Wechselstrombetrieb entsprechenden Fall, geschlossene Stromkreise zu erhalten, werden parallel zu den Freilaufdioden Halbleiterschalter angeordnet, die jeweils während der Zeitintervalle durch die zweite Steuereinrichtung geschlossen werden, während der die zugehörigen Stromkreise stromführend sein sollen. Durch die Taktfrequenz der Halbleiterschalter kann somit die Wechselstromfrequenz des Schweißgerätes festgelegt werden.

Darüber hinaus ergibt sich im Wechselstrombetrieb ein scharfer Übergang von der positiven zur negativen Stromphase, so daß insbesondere beim Schweißen von Aluminium ein sicherer Abbau der Oxidschicht erfolgen kann.

Ein besonderer Vorteil des erfindungsgemäßen Schweißgerätes ist darin zu sehen, daß, wenn die Taktfrequenz des Primärstromwandlers im Mittelfrequenzbereich, z.B. bei 25 kHz, liegt und die Frequenz der zweiten Steuerinrichtung variabel ist und z.B. zwischen 50 und 500 Hz liegt, sich die erforderliche Schweißfrequenz optimal dem Werkstückverhalten anpassen läßt.

Die Erfindung wird im folgenden anhand einer zwei Ausführungsbeispiele schematisch dargestellten Zeichnung erläutert.

Dabei zeigen:
- Fig. 1: ein Lichtbogenschweißgerät mit einen aus zwei Teilwandlern bestehenden Stromwandler
**und**
- Fig. 2: ein Lichtbogenschweißgerät mit einem einteiligen Stromwandler

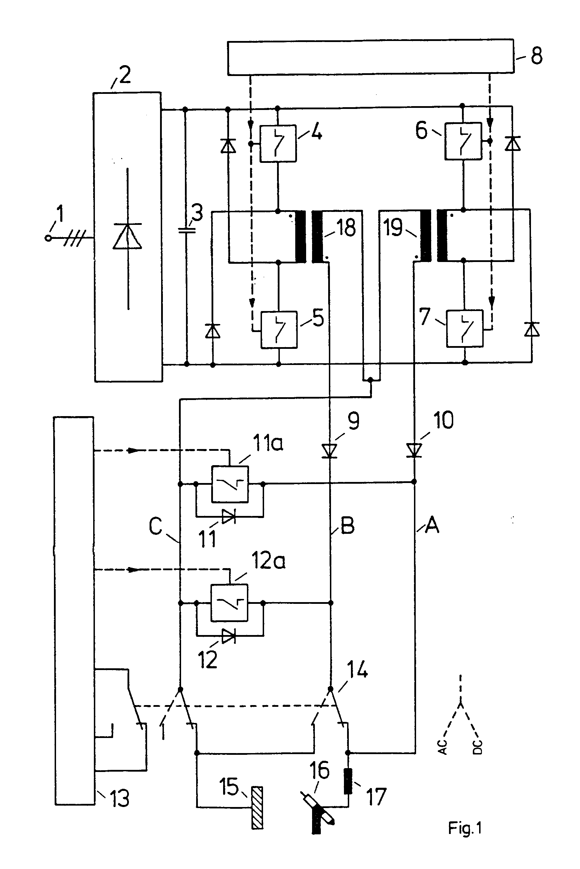

Fig. 1 zeigt einen von einem Dreiphasennetz 1 gespeisten Gleichrichter 2, der sowohl mit gesteuerten als auch mit ungesteuerten Stromventilen ausgerüstet sein kann. Der Gleichrichter 2 speist einen einen Zwischenkreis bildenden Kondensator 3, der seinerseits einen ihm nachgeordneten Wechselrichter versorgt. Der Wechselrichter besteht aus zwei getrennten Stromwandlern 18,19, die über Schalter 4,5,6,7, die von einer ersten Steuereinrichtung 8 getaktet werden, derart angesteuert werden, daß primärseitig wechselweise sich nicht überlappende Ströme in die Stromwandler 18,19 fließen.

Die Sekundärseiten der als Doppeldurchflußwandler geschalteten Stromwandler 18,19 weisen zwei, jeweils eine Zuleitung für einen Stromkreis A,B bildende Anschlüsse und einen gemeinsamen Mittenanschluß C für die Rückleitung der Ströme auf. Innerhalb der Stromkreise A,B befinden sich jeweils eine Gleichrichterdiode 9,10, um die jeweils in der Sekundärwicklung der Stromwandler 18,19 induzierten Spannungen gleichzurichten.

Über einen Umschalter 14 können die Stromkreise A,B bzw. der Mittenanschluß C derart mit dem einen 16 oder dem andere Anschluß 15 der Schweißelektrode verbunden werden, daß in einer ersten Stellung (DC) beide Stromkreise A, B über eine Drossel 17 gemeinsam mit dem Schweißelektrodenanschluß 16 sowie der Mittenanschluß C mit dem anderen Anschluß 15 und in einer zweiten Stellung (AC) der Stromkreis A über die Drossel 17 mit dem einen Anschluß 16 sowie der Stromkreis B mit dem anderen Anschluß 15 verbunden sind und der Mittenanschluß C vom anderen Anschluß 15 getrennt ist. Die Glättungsdrossel 17 dient zur Glättung des in die Schweißelektrode eingespeisten Stromverlaufes.

Die Verbindung des Mittenanchlusses C zu jeweils einer Zuleitung der Stromkreise A,B wird jeweils durch eine Reihenschaltung aus einer Diode 11,12 bzw. einem gesteuerten Halbleiterschalter 11a,12a gebildet. Beide Halbleiterschalter 11a,12a werden gemeinsam von einer zweiten Steuereinrichtung 13 angesteuert.

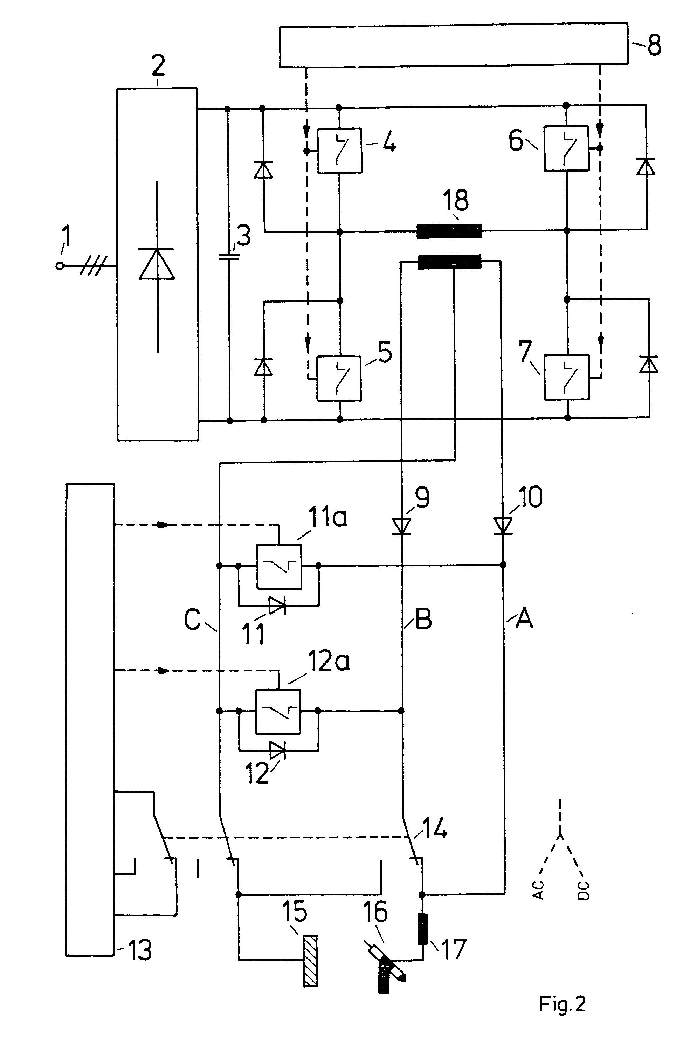

Das in Fig. 2 dargestellte zweite Ausführungsbeispiel der Erfindung unterscheidet sich vom ersten Ausführungsbeispiel nur dadurch, daß der Wechselrichter in diesem Falle nur einen einzigen Stromwandler 18 enthält. Dieser ist als Gegentaktwandler im Mittenzweig einer Brückenschaltung angeordnet, deren Brückendiagonale jeweils durch ein gemeinsames Schließen der Schalter 5,6 bzw. 4,7 wechselweise mit Strom versorgt wird.

Hinsichtlich seiner Funktion ist dieser Stromwandler jedoch äquivalent zu dem des zuvor geschilderten Ausführungsbeispieles. Aus diesem Grunde kann die Darstellung der Funktionsweise des erfindungsgemäßen Schweißgeätes für beide Ausführungsbeispiele gemeinsam erfolgen:
Im Falle der Speisung der Schweißelektrode 16,15 mit Gleichstrom ist der Umschalter 14 in der dargestellten, durchgezogenen Stellung (DC). Dann fließt der Strom durch die wechselweise getakteten Stromkreise A,B gleichsinnig über die Drossel 17 in den Schweißelektrodenanschluß 16 über den Mittenanschluß C zurück zum Stromwandler. In diesem Betriebszustand sind die Halbleiterschalter 11a,12a ständig geöffnet, so daß die Freilaufdioden 11,12 jeweils den Strom in der nicht stromführenden Phase des Wandlers führen können.

Im Wechselstrombetrieb befindet sich der Umschalter 14 in der linken, gestichelten Stellung (AC). Unter Annahme, daß zunächst der Stromkreis A stromführend ist, fließt der Strom über die Glättungsdrossel 17, den Schweißelektrodenanschluß 16, den anderen Anschluß 15, den Umschalter 14 und über den während der stromführenden Phase des Stromkreises A leitenden Halbleiterschalter 12a zum Mittenanschluß C des Stromwandlers. Da der andere Halbleiterschalter 11a in diesem Zustand geöffnet ist, wirkt die Diode 11 als Freilaufdiode. Im anderen Fall, wenn der Stromkreis B Strom führt, ergibt sich ein Stromfluß über die Diode 9, den Umschalter 14, den anderen Anschluß 15, den einen Anschluß 16, die Glättungsdrossel 17 und den dann geschlossenen Schalter 11a zurück zum Mittenanschluß C, wobei hier die Diode 12 als Freilaufdiode wirkt.

Während die primäre Taktfrequenz des Stromwandlers 18 bzw. 19 durch die Taktfrequenz der ersten Steuereinrichtung 8 auf einen Wert von z.B. 25 kHz eingestellt wird, kann die an die Schweißelektrode abgegebene Frequenz der Wechselspannung über die Taktzeit der zweiten Steuereinrichtung 13 wählbar eingestellt werden. Hierdurch ist ein weitgehende Anpassung an die Erfordernisse im jeweiligen Anwendungsfall möglich; insbesondere ist es beim Aluminiumschweißen sinnvoll, eine Wechselfrequenz zwischen 50 und 500 Hz zu wählen.

## Patentansprüche

1. Lichtbogenschweißgerät bestehend aus einem wechselstromgespeisten Gleichrichter (2), der einen Zwischenkreis (3) versorgt, mindestens einem an den Zwischenkreis (3) angeschlossenen, von einer ersten Steuereinrichtung (8) primärseitig wechselweise getakteten Stromwandler (18, 19), der sekundärseitig Stromkreise (A, B) mit einem gemeinsamen Mittenanschluß (C) zur Speisung der Schweißelektrode (15, 16) bildet, welche jeweils parallel zur Schweißelektrode (15, 16) ein Freilaufdiode (11, 12) und in Reihe zur Schweißelektrode (15, 16) eine Gleichrichterdiode (9, 10) und eine Drossel (17) enthalten,
**dadurch gekennzeichnet**,
daß ein Umschalter (14) vorgesehen ist, in dessen erster Stellung (DC) beide Stromkreise (A, B) gemeinsam mit dem einen Anschluß (16) der Schweißelektrode und der Mittenanschluß (C) mit dem anderen Anschluß (15) der Schweißelektrode und in dessen zweiter Stellung (AC) der erste Stromkreis (A) mit dem einen Anschluß (16), der zweite Stromkreis (B) mit dem anderen Anschluß (15) verbunden ist und der Mittenanschluß (C) vom anderen Anschluß (15) getrennt ist, und daß parallel zu den Freilaufdioden (11, 12) erste (11a) und zweite (12a), durch ein zweite Steuereinrichtung (13) steuerbare Halbleiterschalter vorgesehen sind derart,
daß in der zweiten Stellung des Umschalters (14) der erste Halbleiterschalter (12a) den Strom des ersten Stromkreises (A) und der zweite Halbleiterschalter (11a) den Strom des zweiten Stromkreises (B) führt.

2. Lichtbogenschweißgerät nach Anspruch 1,
**dadurch gekennzeichnet**, daß die Taktfrequenz der ersten Steuereinrichtung (8) im Mittelfrequenzbereich, insbesondere bei 25 kHz, liegt und die Taktfrequenz der zweiten Steuereinrichtung (13), insbesondere zwischen 50 und 500 Hz, veränderbar ist.

3. Lichtbogenschweißgerät nach Anspruch 1 oder 2,
**dadurch gekennzeichnet**, daß jeweils eine Freilaufdiode (11,12) und ein Halbleiterschalter (11a,12a) durch ein gemeinsames Bauelement gebildet werden.

## Claims

1. An arc welding apparatus comprising a rectifier (2) which is supplied with alternating current and which supplies an intermediate circuit (3); and at least one current transducer (18, 19) which is connected to the intermediate circuit (3) and which is alternately timed on the primary side by a control device (8) and which on the secondary side forms circuits (A, B) with a common central connection (C) to supply the welding electrode (15, 16), the circuits (A, B) each comprising a freewheeling diode in parallel with the welding electrode (15, 16) and a rectifier diode (9, 10) and a choke (17) in series with the welding electrode (9, 10), characterized in that a reversing switch (14) is provided in whose first position (DC) both circuits (A, B) are jointly connected to one connection (16) of the welding electrode and the central connection (C) to the other connection (15) of the welding electrode, and in whose second position (AC) the first circuit (A) is connected to one connection (16) and the second circuit (B) to the other connection (15), the central connection (C) being separated from the other connection (15), and first (11a) and second (12a) semiconductor switches controllable via a second control device (13) are so provided in parallel with the freewheeling diodes (11, 12) that in the second position of the reversing switch (14) the first semiconductor switch (12a) carries the current of the first circuit (A) and the second semiconductor switch (11a) carries the current of the second circuit (B).

2. An arc welding apparatus according to claim 1, characterized in that the timing-pulse rate of the first control device (8) lies in the medium frequency range, being more particularly 25 kHz, and the timing-pulse rate of the second control device (13) can be varied, more particularly between 50 and 500 Hz.

3. An arc welding apparatus according to claims 1 or 2, characterized in that each freewheeling diode (11, 12) is combined with each semiconductor switch (11a, 12a) to form a common component.

## Revendications

1. Appareil de soudage à l'arc comprenant un redresseur (2) alimenté en courant alternatif, qui alimente un circuit intermédiaire (3), au moins un transformateur (18,19) raccordé au circuit intermédiaire (3) synchronisé de côté primaire alternant par un premier dispositif de commande (8), ce transformateur (18,19) formant de côté secondaire des circuits (A,B) avec une connexion médiane commune (C) pour l'alimentation de l'électrode de soudage (15,16), lesquels contiennet chacun une diode de roue libre (11,12) parallèle à l'électrode pour le soudage (15,16) et une diode de redressement (9,10) et une bobine d'arrêt (17) en série de l'électrode pour le soudage (15,16),
caractérisé en ce qu'
un commutateur (14) est prévu pour lequel dans sa première position (DC) les deux circuits (A,B) sont raccordés ensemble à une des connexions (16) de l'électrode pour le soudage et la connexion médiane (C) est raccordée à l'autre connexion (15) de l'électrode pour le soudage et dans sa deuxième position (AC) le premier circuit (A) est raccordé à l'une des connexions (16) et le deuxième circuit (B) est raccordé à l'autre (15) et la connexion médiane (C) est séparée de l'autre connexion (15), et que des premiers (11a) et secondes (12a) interrupteurs semi-conducteurs à commander par un deuxième dispositif de commande (13) sont prévus parallèles aux diodes de roue libre (11,12), de telle manière que dans la deuxième position du commutateur (14) le premier interrupteur semi-conductuer (12a) prend le courant du premier circuit (A) et le deuxième interrupteur semi-conducteur (11a) prend le courant du deuxième circuit (B).

2. Appareil de soudage à l'arc selon revendication 1,
caractérisé en ce que la fréquence de synchronisation du premier dispositif de commande (8) se situe dans la gamme de moyennes fréquences, particulièrement à 25 kHz, et la fréquence de synchronisation du deuxième dispositif de commande (13) est variable, particulièrement entre 50 et 500 Hz.

3. Appareil de soudage à l'arc selon revendication 1 ou 2,
caractérisé en ce qu' une diode de roue libre (11,12) et un interrupteur semi-conducteur (11a,12a) respectif sont formés par un élément commun.
